# EUROPÄISCHE PATENTSCHRIFT

(11) **EP 2 114 697 B1**
(45) Veröffentlichungstag und Bekanntmachung des Hinweises auf die Patenterteilung: **26.05.2010**
(21) Anmeldenummer: 08701239.9
(22) Anmeldetag: 04.01.2008
(51) Int. Cl.: B60C 9/00

(54) **FESTIGKEITSTRÄGERLAGE AUS HYBRIDCORDEN FÜR ELASTOMERE ERZEUGNISSE, INSBESONDERE FÜR DIE GÜRTELBANDAGE VON FAHRZEUGLUFTREIFEN**
REINFORCEMENT LAYER OF HYBRID CORDS FOR ELASTOMERIC PRODUCTS, PARTICULARLY FOR THE BELT BANDAGE OF PNEUMATIC VEHICLE TYRES
COUCHE SUPPORT DE RÉSISTANCE DE CÂBLÉS HYBRIDES POUR PRODUITS ÉLASTOMÈRES, NOTAMMENT POUR LA SANGLE DE CEINTURE DE PNEUS DE VÉHICULES

(30) Priorität: 02.02.2007 DE 102007005281
(43) Veröffentlichungstag der Anmeldung: 11.11.2009
(73) Patentinhaber: Continental Reifen Deutschland GmbH, 30165 Hannover (DE)
(72) Erfinder: REESE, Wolfgang, 31228 Peine (DE); VAN BARNEVELD, Claus, 30827 Garbsen (DE)
(74) Vertreter: Finger, Karsten
(86) Internationale Anmeldenummer: PCT/EP2008/050058
(87) Internationale Veröffentlichungsnummer: WO 2008/092712

(56) Entgegenhaltungen:
- EP-A- 0 621 143
- EP-A- 1 580 030
- WO-A-97/06297
- JP-A- 10 278 508
- JP-A- 11 227 427
- JP-A- 2005 205 933

## Beschreibung

Die Erfindung betrifft eine Festigkeitsträgerlage für elastomere Erzeugnisse, insbesondere für die Gürtelbandage von Fahrzeugluftreifen, wobei die Festigkeitsträger Hybridcorde sind, welche innerhalb der Lage im Wesentlichen parallel zueinander angeordnet sind und aus einem ersten verdrehten textilen Garn aus einem ersten Material und aus einem zweiten verdrehten textilen Garn aus einem zweiten Material, die miteinander endverdreht sind, aufgebaut sind, wobei das erste verdrehte textile Garn ein Polyketongarn ist. Ferner betrifft die Erfindung einen Fahrzeugluftreifen, enthaltend eine Gürtelbandage und/oder einen Wulstverstärker aus einer solchen Festigkeitsträgerlage.

Um bei Fahraeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, welcher im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in Gummi eingebettet sind.

Die Bandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Vorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird. Bei neueren Aufbautrommeln wird nur noch eine geringere Dehnung während der Reifenherstellung von etwa max. 2 % gefordert. Bei neueren Vorrichtungen ist die Erhebung geringer.

Die Corde der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Um diesen Anforderungen zu genügen, sollten sich die Corde bis zu einer Dehnung von ca. 4 % mit mäßigem Kraftaufwand und ab einer höheren Dehnung nur noch mit sehr hohem Kraftaufwand dehnen lassen.

Eine gattungsgemäße Festigkeitsträgerlage ist aus der JP-A-2005-205933, insbesondere als Verstärkungslage für Fahrzeugluftreifen in Radialbauart als Gürtelbandage, bekannt geworden. Das zweite verdrehte textile Garn ist jedoch ein Nylongarn. Die Verstärkungslage mit den vorgenannten Festigkeitsträgern soll insbesondere dazu dienen, den Rollwiderstand und die Fahrgeräuschentwicklung zu verringern, als aber auch die Haltbarkeit des Reifens zu sichern.

Der vorliegenden Erfindung liegt die Aufgabe zu Grunde, eine Festigkeitsträgerlage aus Hybridcorden für elastomere Erzeugnisse, insbesondere für die Gürtelbandage von Fahrzeugluftreifen bereitzustellen, die sich durch ein Kraft-Dehnungs-Verhalten auszeichnet, das bei Verwendung der Festigkeitsträgerlage insbesondere als Gürtelbandage in Fahrzeugluftreifen einen problemlosen Reifenbau samt Vulkanisation ermöglicht und dem Reifen eine große Hochgeschwindigkeitstauglichkeit verleiht.

Die Aufgabe wird gelöst, indem das zweite verdrehte textile Garn ein Aramidgarn ist. Somit ist eine alternative Festigkeitsträgerlage geschaffen, deren Festigkeitsträger Hybridcorde sind, die aus zwei textilen, miteinander verdrehten Garnen bestehen, wobei ein textiles Garn ein Polyketongarn ist, während das andere textile Garn ein Aramidgarn ist.

Erfindungswesentlich ist, dass überraschender Weise trotz der Verwendung von Aramid als eines der beiden Garnmaterialien des Hybridcordes eine ausreichende Dehnung während des Reifenherstellungsschrittes der Bombage erhaltbar ist, so dass der Reifenrohling präzise ausformbar ist. Zudem ist der Reifen gut hochgeschwindigkeitstauglich. Es ist bekannt, dass Aramidgarne und -corde einen besonders hohen Elastizitätsmodul aufweisen und die als Festigkeitsträgerlage im fertig hergestellten Reifen vorteilhafte Eigenschaften des Nicht-Schrumpfens und der geringen plastischen Verformung zeigen. Während des Reifenaufbaus hingegen erweisen sich reine Aramidfestigkeitsträgerlagen als nachteilig, weil diese eine zu geringe Dehnung haben, so dass der Reifenrohling nur ungenügend ausformbar ist und dadurch nur eine schlechte Uniformity des Reifens zu erhalten ist. Zudem ist das Aramidmaterial teuer. Somit sind Aramidcorde als Festigkeitsträger, insbesondere in Reifenanwendungen als Gürtelbandage, bisher nicht vorteilhaft als Festigkeitsträger, die während der Reifenherstellung der Dehnung unterliegen, einsetzbar. Der erfindungsgemäße Hybridcord hingegen weist eine bessere Dehnung als ein reiner Aramidcord auf. Gegenüber Aramid/PA6.6 hat er einen geringeren Schrumpf. Der Hybridcord ist vergleichsweise preiswert in der Anschaffung, weil Polyketon in der Anschaffung günstiger zu erhalten ist. Beide Garne des Hybridcordes haben tragende Eigenschaften, so dass der Reifen eine verbesserte Umfangssteifigkeit aufweist, welche die guten Hochgeschwindigkeitseigenschaften bewirken. Es ist zudem eine präzise Ausformung während der Reifenherstellung ermöglicht, wodurch der Reifen eine gute Uniformity aufweist.

Zusätzlich kann die Dehnung des Cordes durch geeignete, dem Fachmann bekannte Dip-Verfahren gesteuert werden.

Gemäß vorteilhafter Weiterbildungen weisen entweder das Aramidgarn und/oder das Polyketongarn eine Feinheit ≤ 1680 dtex auf. Somit ist ein vergleichsweise feiner Hybridcord geschaffen, der aufgrund seines geringen Gewichtes, aber auch aufgrund seiner vorbeschriebenen vorteilhaften Eigenschaften wie die Tragfähigkeit beider Garne des Hybridcordes, geringe bis keine Schrumpfeigenschaften des Cordes und die gute Anbindbarkeit des Cordes an Gummi, die Performance des Reifens, insbesondere eines UHP-(Ultra-High-Performace-) Reifens, erhöht. Der Unterschied in den Feinheiten zwischen beiden Garnen sollte möglichst gering gewählt werden, um einen möglichst gleichmäßigen Cord zu erhalten, der sich gut verarbeiten lässt und der eine gute Restfestigkeit nach Ermüdung aufweist. Vorteilhaft ist es, wenn beide den Cord bildenden Garne die gleiche Feinheit aufweisen.

Vorteilhaft ist es, wenn die beiden, den Hybridcord bildenden Garne mit einer Drehungszahl von 380-480 1/m endverdreht sind.

Mit "Polyketon" ist ein Polyolefinketon gemeint, welches ein Kondensationsprodukt aus Ethen und Kohlenmonoxid ist.

Um eine zuverlässige Haftung von textilen Festigkeitsträgern zum Gummi zu gewährleisten, ist es zweckmäßig, die textilen Hybridcorde mit einer Haftimprägnierung, z.B. mit einem RFL-Dip im 1- oder 2-Bad-Verfahren, zu versehen.

Verwendet man wenigstens eine der vorbeschriebenen Festigkeitsträgerlage in einem Fahrzeugluftreifen, vorzugsweise als Gürtelbandage, so weist der Reifen eine besonders gute Hochgeschwindigkeitstauglichkeit auf und Abplattungen bei Last (Flatspotting) sind stark reduziert.

Beim Einsatz der vorbeschriebenen Festigkeitsträgerlage als Wulstverstärker in einem Fahrzeugluftreifen liegt der Vorteil darin, dass die Hybridfestigkeitsträger einen höheren Modul als bisher üblicherweise eingesetzte Nylonfestigkeitsträgerlagen aufweisen, dass die Haftung zum Gummi verbessert ist und ebenfalls ein Kostenvorteil vorhanden ist.

Ausführungsbeispiele und weitere Vorteile der Erfindung werden im Zusammenhang mit der nachfolgenden Tabelle näher erläutert:

Ein Polyketongarn auf der Basis von einem mulitfilenem Polyolefinketongarn mit einer Feinheit von 1670 dtex, Z- gedreht mit 387 T/m Erstverdrehung und ein Garn aus Aramid mit einer Feinheit von 1670 dtex, Z- gedreht wurden S- gedreht mit 387 T/m Erstverdrehung wurden mit einer Endverdrehung von 373 T/m zu einem Hybridcord (Polyketon 1670x1 + Aramid 1670x1) verdreht.

Ein weiterer beispielhafter Hybridcord, der in der erfindungsgemäßen Festigkeitsträgerlage eingesetzt wird, ist ein Polyketongarn mit einer Feinheit von 1670 dtex, Z- gedreht mit 409 T/m Erstverdrehung und ein Garn aus Aramid auf der Basis von mit einer Feinheit von 1100 dtex, Z- gedreht mit 409 T/m Erstverdrehung wurden mit einer Endverdrehung von 409 T/m zu einem Hybridcord (Polyketon 1670x 1 + Aramid 1100x1) S- verdreht.

Diese Corde wiesen ungedippt die in der Tabelle dargestellten Eigenschaften auf. Es wird davon ausgegangen, dass diese Eigenschaften durch das Dippen kaum oder nur unwesentlich verändert werden. Als Vergleich sind Hybridcorde aus Polyketon und Nylon aufgeführt. Alternativ können die Garne S- und der Cord Z- gedreht sein.

**Tabelle**

| | Hybridcord Polyketon + Aramid dtex 1670x1 dtex1670x1 | Hybridcord Polyketon + Aramid dtex 1670x1 dtex 1100x1 | Hybridcord Polyketon + PA66 dtex 1670x1 dtex 1400x1 | Hybridcord Polyketon + PA66 dtex 1670x1 dtex940x1 |
|---|---|---|---|---|
| Breaking Force (N) ASTM D 855 | 349,30 | 329,00 | 274,80 | 251,40 |
| Elongation at break (%) ASTM D 855 | 5,98 | 6,01 | 11,33 | 13,58 |
| Elongation at 45 N (%) ASIM D 855 | 1,70 | 1,75 | 4,46 | 5,94 |
| Shrinkage at 180°C (%) ASTM D 855 | 1,00 | 1,03 | 6,37 | 7,13 |

Es ist ersichtlich, dass die Hybridcorde aus Polyketon und Aramid bei einer größeren Kraftbeanspruchung nach ASTM D 855 von 349,3N und bei 329,00N brechen, während die vergleichbaren Hybridcorde aus Polyketon und Nylon bereits bei einer Kraftbeanspruchung von 274,80N und 251,40N brechen. Diese erhöhte Haltbarkeit der Hybridcorde aus Polyketon und Aramid ist darauf zurückzuführen, dass beide Cordanteile tragende Eigenschaften übernehmen.

Die Bruchdehnung (Elongation at break) nach ASTM D 855 beträgt bei den Hybridcorden aus Polyketon und Aramid ca. 6%, während die Bruchdehnung der Hybridcorde aus Polyketon und Nylon mit 11,33% bzw. 13,58% in etwa doppelt so hoch ist. Die Dehnung der Hybridcorde bei 45N nach ASTM D 855 ergibt, dass die Hybridcorde aus Polyketon und Aramid lediglich einer Dehnung von 1,70% bzw. 1,75% unterliegen, während die Hybridcorde aus Polyketon und Nylon um 4,46% bzw. um 5,94% gedehnt werden.

Das Schrumpfverhalten nach ASTM D 855 bei 180°C ist bei den Hybridcorden aus Polyketon und Aramid ebenfalls vorteilhafter als bei den Hybridcorden aus Polyketon und Nylon. Während die Hybridcorde aus Polyketon und Nylon um 6,37% bzw. um 7,13% schrumpfen, unterliegen die Hybridcorde aus Polyketon und Aramid lediglich einer Schrumpfung von 1,00% bzw. 1,03%.

Somit ist durch den Hybridcord aus Polyketon und Aramid eine Festigkeitsträgerlage für elastomere Erzeugnisse, insbesondere für die Gürtelbandage von Fahrzeugluftreifen, geschaffen, die mit einer ausrechenden Dehnung einen Reifenaufbau, insbesondere mit neuen Aufbautrommeln, ermöglicht, so dass der Reifenrohling präzise ausformbar ist. Zudem ist der Reifen durch die hohe Festigkeit der Hybridcordfestigkeitsträgerlagen umfangssteif und besonders gut hochgeschwindigkeitstauglich.

## Patentansprüche

1. Festigkeitsträgerlage für elastomere Erzeugnisse, insbesondere für die Gürtelbandage von Fahrzeugluftreifen, wobei die Festigkeitsträger Hybridcorde sind, welche innerhalb der Lage im Wesentlichen parallel zueinander angeordnet sind und aus einem ersten verdrehten textilen Garn aus einem ersten Material und aus einem zweiten verdrehten textilen Garn aus einem zweiten Material, die miteinander endverdreht sind, aufgebaut sind, wobei das erste verdrehte textile Garn ein Polyketongarn ist,
**dadurch gekennzeichnet, dass** das zweite verdrehte textile Garn ein Aramidgarn ist.

2. Festigkeitsträgerlage nach Anspruch 1,
**dadurch gekennzeichnet, dass** das Aramidgarn eine Feinheit ≤ 1680 dtex aufweist.

3. Festigkeitsträgerlage nach zumindest einem der vorangehenden Ansprüche,
**dadurch gekennzeichnet, dass** das Polyketongarn eine Feinheit ≤1680 dtex aufweist.

4. Festigkeitsträgerlage nach zumindest einem der vorangehenden Ansprüche,
**dadurch gekennzeichnet, dass** beide Garne zu einem Hybridcord mit 380-480 1/m endverdreht sind.

5. Festigkeitsträgerlage nach zumindest einem der vorangehenden Ansprüche,
**dadurch gekennzeichnet, dass** die Hybridcorde mit einer Haftimprägnierung zur Gewährleistung der Haftung der textilen Festigkeitsträger zum Gummi versehen sind.

6. Fahrzeugluftreifen, enthaltend zumindest eine Festigkeitsträgerlage gemäß zumindest einem der Ansprüche 1 bis 5.

7. Fahrzeugluftreifen nach Anspruch 6,
**dadurch gekennzeichnet, dass** die Festigkeitsträgerlage als Gürtelbandage und/oder als Wulstverstärker angeordnet ist.

## Claims

1. Strength element ply for elastomeric articles of manufacture, particularly for the belt bandage of pneumatic vehicle tyres, wherein the strength elements are hybrid cords which form an essentially parallel arrangement within the ply and are constructed of a first twisted textile yarn of a first material and of a second twisted textile yarn of a second material which are end-twisted together, wherein the first twisted textile yarn is a polyketone yarn,
**characterized in that** the second twisted textile yarn is an aramid yarn.

2. Strength element ply according to Claim 1,
**characterized in that** the aramid yarn has a linear density ≤ 1680 dtex.

3. Strength element ply according to at least one of the preceding claims,
**characterized in that** the polyketone yarn has a linear density ≤ 1680 dtex.

4. Strength element ply according to at least one of the preceding claims,
**characterized in that** the two yarns are end-twisted together at 380-480 1/m to form a hybrid cord.

5. Strength element ply according to at least one of the preceding claims,
**characterized in that** the hybrid cords have an adhesive impregnation to ensure adherence of the textile strength elements to the rubber.

6. Pneumatic vehicle tyre comprising at least one strength element ply according to at least one of Claims 1 to 5.

7. Pneumatic vehicle tyre according to Claim 6,
**characterized in that** the strength element ply is disposed as belt bandage and/or as bead reinforcer.

## Revendications

1. Couche d'éléments de renfort pour produits en élastomère, en particulier pour la bande de ceinture de bandages pneumatiques pour roues de véhicules,
les éléments de renfort étant des câbles hybrides qui sont disposés essentiellement en parallèle les uns aux autres à l'intérieur de la couche et étant constitués d'un premier fil textile torsadé en un premier matériau et d'un deuxième fil textile torsadé en un deuxième matériau, les fils recevant un torsadage final les uns avec les autres, le premier fil textile torsadé étant un fil de polycétone,
**caractérisée en ce que**
le deuxième fil textile torsadé est un fil d'aramide.

2. Couche d'éléments de renfort selon la revendication 1, **caractérisée en ce que** le fil d'aramide présente une finesse ≤1 680 dtex.

3. Couche d'éléments de renfort selon au moins l'une des revendications précédentes, **caractérisée en ce que** le fil de polycétone présente une finesse ≤ 1 680 dtex.

4. Couche d'éléments de renfort selon au moins l'une des revendications précédentes, **caractérisée en ce que** les deux fils reçoivent un torsadage final de 380 à 480 1/m pour former un câble hybride.

5. Couche d'éléments de renfort selon au moins l'une des revendications précédentes, **caractérisée en ce que** les câbles hybrides sont dotés d'une imprégnation d'adhésif qui garantit l'adhérence des renforts textiles sur le caoutchouc.

6. Bandage pneumatique pour roue de véhicule contenant au moins une couche d'éléments de renfort selon au moins l'une des revendications 1 à 5.

7. Bandage pneumatique pour roue de véhicule selon la revendication 6, **caractérisé en ce que** la couche d'éléments de renfort est disposée comme bande de ceinture et/ou comme renfort de bourrelet.
